# EUROPÄISCHE PATENTANMELDUNG

(11) **EP 1 101 590 A1**
(43) Veröffentlichungstag der Anmeldung: **23.05.2001**
(21) Anmeldenummer: 00124628.9
(22) Anmeldetag: 10.11.2000
(51) Int. Cl.: B29C 44/14, B29C 44/12, B60R 13/02

(54) **Verfahren zur Herstellung eines Fahrzeug-Karosserieteils in Sandwich-Bauweise**

(30) Priorität: 16.11.1999 DE 19955167
(71) Anmelder: Webasto Vehicle Systems International GmbH, 82131 Stockdorf (DE)
(72) Erfinder: Kölbl, Michael, 82061 Neuried (DE); De Gaillard, Francois, 85390 Mouilleron en Pareds (FR)
(74) Vertreter: Wiese, Gerhard

(57) **Zusammenfassung**

Verfahren zur Herstellung eines Fahrzeug-Karosserieteils, insbesondere eines Fahrzeugdach, das in Sandwich-Bauweise schichtartig aus einer Außenschale (10), die aus einer Schaumschicht (12) mit Außenhaut (14) besteht, und einer Innenschale (11) aufgebaut ist, wobei die Innenschale (11) als Fertigbauteil in eine erste Formhälfte eines Formwerkzeugs eingelegt, Schaummaterial auf der in dessen zweite Formhälfte plazierte, ausgeformte Außenhaut (14) aufgebracht wird, die beiden Formhälften geschlossen werden und das Schaummaterial unter erhöhter Temperatur aushärten gelassen wird.

## Beschreibung

Die Erfindung betrifft ein Verfahren zur Herstellung eines Fahrzeug-Karosserieteils, insbesondere eines Fahrzeugdach, das in Sandwich-Bauweise schichtartig aus einer Außenschale, die aus einer Schaumschicht mit Außenhaut besteht, und einer Innenschale aufgebaut ist, wobei die Innenschale als Fertigbauteil in eine erste Formhälfte eines Formwerkzeugs eingelegt, Schaummaterial auf der in dessen zweite Formhälfte plazierte, ausgeformte Außenhaut aufgebracht wird, die beiden Formhälften geschlossen werden und das Schaummaterial unter erhöhter Temperatur aushärten gelassen wird.

Fahrzeug-Karosserieteile in Sandwich-Bauweise der in Rede stehenden Art erlauben eine kundengerechte Fahrzeugindividualisierung. Angewendet auf ein Fahrzeugdach ist dadurch beispielsweise der Ersatz einer herkömmlichen Fahrzeug-Dachhaut durch ein Moduldachsystem möglich. Ein derartiges Moduldachsystem erlaubt es beispielsweise dem Fahrzeughersteller, schneller und kostengünstiger zu produzieren und auf Marktentwicklungen zu reagieren. Ein solches Moduldach ist beispielsweise aus der DE 197 09 016 A1 bekannt. Dieses bekannte Moduldach umfasst in einstückiger untrennbarer Ausbildung die Innenschale und die Außenschale, die getrennt hergestellt und daraufhin integriert werden. Die Außenhaut der Außenschale des in Sandwichbauweise bereitgestellten Fahrzeug-Karosserieteils wird üblicherweise aus einer Folie bzw. aus Blech tiefgezogen und mit einem Schaumstoff, beispielsweise Polyurethan ausgeschäumt, wodurch die Außenschale fertiggestellt ist. Anschließend wird die separat hergestellte Innenschale in eine Formhälfte eines Schäumwerkzeugs eingelegt, in dessen andere Hälfte die Außenschale positioniert ist. Daraufhin wird das Schäumwerkzeug geschlossen und das Karosserieteil in Sandwich-Bauweise wird ausgehärtet und daraufhin aus dem Schäumwerkezug als montierbares Fertigbauteil entnommen.

Bei Führung des eingangs genannten Verfahrens in der bisher bekannten Weise werden zwei getrennte Werkzeuge zur Herstellung benötigt, nämlich ein Tiefziehwerkzeug und ein Schäumwerkzeug, was hohe Werkzeugkosten und eine relativ lange Fertigungszeit zur Folge hat.

Aus der DE 36 04 175 C2 ist ein Verfahren und eine Einrichtung zum Formschäumen von Schaumstoff in Verbindung mit hartem Kunststoff bekannt. Dieses Verfahren sieht vor, dass der harte Kunststoff in Berührung mit einer Formhälfte eines Formwerkzeugs vor dem Formschäumen des Schaumstoffs vorgeformt wird, indem der an der Formhälfte festgehaltene harte Kunststoff bei offener Form mit Hilfe eines an dieser Formhälfte vorgesehenen beweglichen Stempels vorgeformt wird, woraufhin der Schaumstoff durch Impulsbeaufschlagung mit Dampf auf den harten Kunststoff formgeschäumt wird. Dieses Verfahren nutzt zwar lediglich ein einziges Werkzeug zur Herstellung eines Schaumstoffformteils mit Außenhaut, hat jedoch den Nachteil, dass eine der beiden Formhälften relativ komplex mit einem Stempel und Stempelantrieb gestaltet ist und entsprechend aufwendig betätigt werden muss.

Angesichts dieses Standes der Technik liegt der Erfindung die Aufgabe zugrunde, den Aufwand bei der Durchführung des eingangs genannten Verfahrens zu reduzieren und ein einfaches und zuverlässiges Verfahren zur Herstellung eines Fahrzeug-Karosserieteils in Sandwich-Bauweise bereitzustellen.

Gelöst wird diese Aufgabe durch die kennzeichnenden Merkmale des Anspruchs 1. Vorteilhafte Weiterbildungen der Erfindung sind in den Unteransprüchen angegeben.

Das erfindungsgemäße Verfahren basiert demnach auf Nutzung eines einzigen Formwerkzeugs und ist so geführt, dass mit zwei aufeinanderfolgenden Werkzeug- Schließhüben zunächst die Außenhaut der Außenschale geformt und daraufhin mit dem nächsten Schließhub die Schaumschicht der Außenschale ausgebildet und die Integration von Außenschale und Innenschale bewirkt wird. Bei dieser zweistufigen Herstellung des Fahrzeug-Karosserieteils in ein und demselben Formwerkzeug erfolgt die Formgebung für die Außenhaut in der ersten Stufe unter maximalem Hub der beiden Formhälften, während die Erzeugung des Schaumkörpers und Integration von Außenschale und Innenschale unter reduziertem Hub in der zweiten Stufe erfolgt. Dieser reduzierte Hub beläßt eine Kavität für den Schäumvorgang zur Erzeugung der Solldicke der Schaumschicht der Außenschale. Durch an sich bekannte Wärmeeinwirkung dehnt sich das Schaummaterial für die Schaumschicht in dieser Kavität aus und bildet das dauerhafte Bindemittel zwischen Außenschale und Innenschale, sobald die Schaumschicht vollständig ausgehärtet ist.

Als Schaummaterial kommt bevorzugt Polyurethan in Betracht. Das Schaummaterial kann ggf. Glasfaseranteile enthalten, um die Festigkeit der Schaumschicht zu erhöhen. Für die Außenhaut der Außenschale kommen grundsätzlich beliebige Flachmaterialien in Betracht, solange diese verformbar sind und die erforderliche Festigkeit bereitstellen. Ein geeignetes Material für die Außenhaut ist demnach sowohl Kunststoff in Gestalt einer Folie sowie Blech.

Nachfolgend wird die Erfindung anhand der Zeichnungen beispielhaft näher erläutert;

Es zeigen:
- Fig. 1: schematisch im Schnitt ein Fahrzeugdach, das dazu bestimmt ist, als Fertigteil in eine Fahrzeug-Rohkarosserie eingebaut zu werden, wobei lediglich der Randbereich des Fahrzeugdachs gezeigt ist.
- Fig. 2A - 2E: in dieser Abfolge die Schritte zur Herstellung des in Fig. 1 gezeigten Fahrzeug-Karosserieteils.

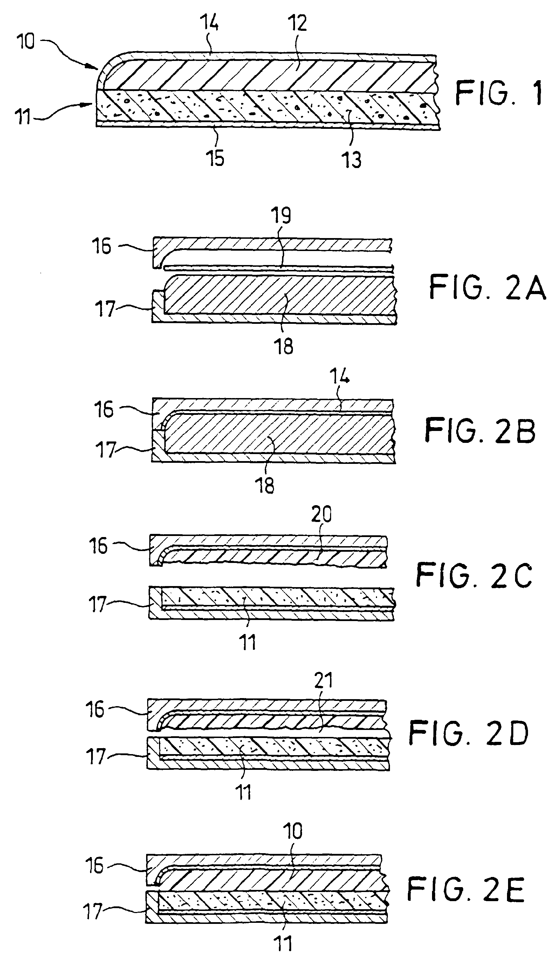

Das beispielsweise als Fahrzeugdach ausgelegte vorgefertigte Fahrzeug-Karosserieteil, das in Fig. 1 gezeigt ist, ist in Sandwich-Bauweise erstellt und besteht aus einstückig miteinander verbundenen Schalen, nämlich einer Außenschale 10 und einer Innenschale 11. Bei der dargestellten Ausführungsform besitzen beide Schalen 10, 11 einen Schaumgrundkörper bzw. Schaumschichten, die an ihren gegeneinander gerichteten Seiten miteinander verbunden sind. Die Schaumschicht der Außenschale 10 ist als Hartschaumschicht gebildet, während die Schaumschicht der Innenschale 11 als Weichschaumschicht 13 gebildet ist. Auf ihren Außenseiten sind beide Schaumschichten 12, 13 jeweils durch eine Deckschicht abgedeckt. Die Deckschicht auf der Außenseite der Hartschaumschicht 12 ist als relativ harte und feste Außenhaut 14 gebildet und besteht beispielsweise aus Kunststoff bzw. Blech, während die Deckschicht der Weichschaumschicht 13 beispielsweise als Dekorstoff gebildet ist, der zur Innenseite des Fahrzeugs weist. Bei der in Fig. 1 gezeigten Ausführungsform haben die Außenschale 10 und die Innenschale 11 einen gemeinsamen bündig umlaufenden Rand. In der Praxis steht jedoch beispielsweise der Rand der Innenschale 11 über denjenigen der Außenschale 10 vor, um ein Verbindungsmittel mit dem Dachrand der Fahrzeug-Rohkarosserie bereitzustellen.

Die Herstellung des in Fig. 1 gezeigten Moduldachs bzw. Fertigdachs geht aus Fig. 2A bis 2E hervor. Demnach dient zur Herstellung dieses Dachteils ein einziges Formwerkzeug mit zwei Formhälften 16 , 17. Das Herstellungsverfahren läuft wie folgt ab.

Zunächst wird in die eine Formhälfte 17 des geöffneten Formwerkzeugs ein Kern 18 eingelegt, dessen zur anderen Formhälfte 16 weisende Oberfläche der Innenkontur der Außenhaut 14 des fertigen Dachteils entspricht. In der anderen Formhälfte 17 wird ein Flachmaterial 19 eingelegt, welches das Ausgangsprodukt für die Außenhaut 14 bildet. Alternativ kann das Flachmaterial 19 auf der Oberseite des Kerns 18 angeordnet werden. Die Innenseite der Formhälfte 16 entspricht der Außenkontur der Außenhaut 14 des fertigen Dachteils.

Daraufhin wird, wie in Fig. 2B gezeigt, das Formwerkzeug vollständig geschlossen, d.h. unter maximalem relativem Schließhub seiner beiden Formhälften 16, 17, wodurch das beispielsweise aus Blech bestehende Flachmaterial 19 in die fertig geformte Außenhaut 14 umgeformt wird.

Daraufhin wird das Formwerkzeug wieder geöffnet, wie in Fig. 2C gezeigt. Der Kern 18 wird aus der Formhälfte 17 entnommen und statt des Kerns wird in diese Formhälfte 17 die vorgefertigte Innenschale 11 eingesetzt, die aus der Weichschaumschicht 13 und dem Dekorstoff 15 besteht. In der anderen Formhälfte 16 wird das Flachmaterial 19 belassen, welches im vorausgehenden Verfahrensschritt in die Außenhaut 14 geformt wurde. Auf die Innenfläche der Außenhaut 14 wird Schaummaterial 20, beispielsweise Polyurethan aufgetragen.

Daraufhin wird, wie in Fig. 2D gezeigt, das Formwerkzeug erneut geschlossen, jedoch mit einem geringeren Hub als bei dem in Fig. 2B schematisch gezeigten Schließvorgang, so dass zwischen der Oberseite des Schaummaterials 20 und der gegenüberliegenden Oberseite der Innenschale 11 ein Hohlraum bzw. eine Kavität 21 verbleibt.

Wie in Fig. 2E gezeigt ist, wird daraufhin durch Zuführen von Wärme das Schaummaterial 20 aufgeschäumt und zur Verbindung mit der Innenschale 11 gebracht. Nach einer geeigneten Aushärtungszeit wird das Formwerkzeug erneut geöffnet und das fertige Dachteil kann entnommen werden.

### Bezugszeichenliste

- 10: Außenschale
- 11: Innenschale
- 12: Hartschaumschicht
- 13: Weichschaumschicht
- 14: Außenhaut
- 15: Dekorstoff
- 16: Formhälfte
- 17: Formhälfte
- 18: Kern
- 19: Flachmaterial
- 20: Schaummaterial
- 21: Kavität

## Patentansprüche

1. Verfahren zur Herstellung eines Fahrzeug-Karosserieteils, insbesondere eines Fahrzeugdaches, das in Sandwich-Bauweise schichtartig aus einer Außenschale (10), die aus einer Schaumschicht (12) mit einer Außenhaut (14) besteht, und einer Innenschale (11) aufgebaut ist, wobei die Innenschale (11) als Fertigbauteil in eine erste Formhälfte (16) eines Formwerkzeugs (16, 17) eingelegt, Schaummaterial (20) auf der in dessen zweite Formhälfte (16) plazierte, ausgeformte Außenhaut (14) aufgebracht wird, die beiden Formhälften geschlossen werden und das Schaummaterial (20) unter erhöhter Temperatur aushärten gelassen wird, **dadurch gekennzeichnet,** daß zunächst die Außenhaut (14) geformt wird, indem ein Außenhaut-Flachmaterial (19) in einer der Formhälften plaziert und die beiden Formhälften (16 und (17) unter maximalem Hub geschlossen und daraufhin wieder geöffnet werden, woraufhin das Schaummaterial (20) in die ausgeformte Außenhaut 14 eingebracht, die Innenschale (11) in die andere Formhälfte (16) eingelegt wird und die beiden Formhälften unter Belassung einer Kavität (21) unter reduziertem Hub geschlossen werden, die eine Ausdehnung des Schaummaterials (20) bei Wärmezufuhr auf die Enddicke der Schaumschicht der Außenschale (10) zuläßt.

2. Verfahren nach Anspruch 1, **dadurch gekennzeichnet,** daß das Außenhaut-Flachmaterial (19) mittels eines in das Formwerkzeug (17) eingelegten Kerns (18) umgeformt wird.

3. Verfahren nach Anspruch 1 oder 2, **dadurch gekennzeichnet,** daß das Schaummaterial (20) Polyurethan umfaßt.

4. Verfahren nach einem der Ansprüche 1 bis 3, **dadurch gekennzeichnet,** daß das Schaummaterial (20) Glasfaseranteile enthält.

5. Verfahren nach einem der Ansprüche 1 bis 4, **dadurch gekennzeichnet,** daß die Außenhaut (14) aus einer Kunststofffolie besteht.

6. Verfahren nach einem der Ansprüche 1 bis 4, **dadurch gekennzeichnet,** daß die Außenhaut (14) aus Blech besteht.
